# EUROPÄISCHE PATENTSCHRIFT

(11) **EP 2 578 888 B1**
(45) Veröffentlichungstag und Bekanntmachung des Hinweises auf die Patenterteilung: **05.12.2018**
(21) Anmeldenummer: 11008136.1
(22) Anmeldetag: 07.10.2011
(51) Int. Cl.: F04D 27/00, E01C 19/48

(54) **Baumaschine mit automatischer Lüfterdrehzahlregelung**
Construction machine with automatic ventilator rotation speed regulator
Engin doté d'un réglage de régime de ventilateur automatique

(43) Veröffentlichungstag der Anmeldung: 10.04.2013
(73) Patentinhaber: Joseph Vögele AG, 67067 Ludwigshafen (DE)
(72) Erfinder: Noll, Tobias, 76835 Roschbach (DE); Weiser, Ralf, 68526 Ladenburg (DE); Riedl, Thomas, 68167 Mannheim (DE)
(74) Vertreter: Grünecker Patent- und Rechtsanwälte PartG mbB

(56) Entgegenhaltungen:
- EP-A1- 1 528 232
- EP-A1- 1 528 232
- EP-A2- 1 093 943
- DE-A1- 10 062 534
- US-A1- 2009 062 963

## Beschreibung

Die vorliegende Erfindung betrifft eine Baumaschine, insbesondere einen Straßenfertiger oder einen Beschicker, mit automatischer Lüfterdrehzahlregelung gemäß dem Oberbegriff des Anspruchs 1. Außerdem betrifft die vorliegende Erfindung ein Verfahren zum automatischen Regeln und Steuern eines Kühlsystems einer Baumaschine gemäß dem Anspruch 13. In der Praxis werden Dieselmotoren als Antriebsmaschinen in Straßenfertigern eingesetzt. Sowohl die Dieselmotoren als auch die damit angetriebenen Aggregate haben bedingt durch deren Wirkungsgrad eine Verlustleistung, die durch einen Kühler abgeführt werden muss, damit sich die angetriebenen Aggregate nicht überhitzen.
Es ist bekannt, dass in derzeitigen Fertigern drei Arbeitsmedien, nämlich Kühlwasser, Ladeluft und Hydrauliköl, über Wärmetauscher auf die benötigten Temperaturen gekühlt werden. Um einen Luftstrom durch die Wärmetauscher sicherzustellen, ist ein Ventilator Bestandteil der Kühlanlage.
Bei herkömmlichen Straßenfertigern wird der Lüfter starr mit dem Dieselmotor verbunden, so dass der Lüfter zu jedem Zeitpunkt eine Betriebsdrehzahl gleich der Dieselmotordrehzahl annimmt. Nachteilig daran ist, dass selbst bei einem kurzzeitigen Anstieg der Dieselmotordrehzahl ebenfalls der Lüfter auf Hochtouren läuft, wodurch es zu einer erheblichen Lärmentwicklung kommen kann. Ein derart synchrones Betriebsverhalten des Lüfters ist jedoch in der Praxis nicht nötig, weil der Lüfterbetrieb eher von den benötigten Temperaturen der Arbeitsmedien abhängt, als dass er synchron zur Dieselmotordrehzahl angetrieben werden sollte.
Alternativ zu einer starren Kupplung des Lüfters mit dem Dieselmotor werden in der Praxis bei Straßenfertigern hydraulisch angetriebene Lüfter verwendet. Dies hat jedoch den Nachteil, dass hydraulische Verluste im Lüfterantrieb hinzunehmen sind. Außerdem steigt der finanzielle Aufwand enorm, wenn man die Wirkungsgrade eines hydraulischen Lüfterantriebs optimieren möchte.
Die gattungsgemäße DE 100 62 534 A1 bezieht sich auf ein Doppelventilatorsteuersystem für eine Baumaschine. Das Ventilatorsystem umfasst ein elektronisches Steuermodul, welches dazu konfiguriert ist, anhand einer Vielzahl von Betriebsparametern jeweils eine Ventilatordrehzahl für die beiden Ventilatoren zu bestimmen. Nachteilig daran ist, dass das Steuermodul eine große Vielzahl von Eingangssignalen verarbeiten muss, wodurch ein großer Rechenaufwand für das Steuermodul entsteht und es möglich ist, dass das Ventilatorsystem hektisch reagiert.

Die EP 1 528 232 A1 beschreibt eine Kühlanlage für einen Verbrennungsmotor eines PKWs. Die Kühlanlage weist einen Thermostaten als Primärkühlung auf und umfasst zusätzlich einen Lüfter, der als Sekundärkühlung eingesetzt werden kann, wenn mit der Primärkühlung eine Temperaturregelung nicht ausreichend ist. Allerdings ist das Zusammenwirkung zwischen der Primär- und der Sekundärkühlung eher aufwändig, wobei dadurch auch hohe Herstellungskosten entstehen.

Die EP 1 093 943 A2 beschreibt eine Kühlvorrichtung mit einem regelbaren Elektromotor, der mit einem Lüfter funktionell verbunden ist. Anhand unterschiedlicher Betriebsparameter werden eine erste und eine zweite Lüftersolldrehzahl bestimmt, wobei die höhere der beiden Drehzahlen letztendlich zur Regelung des Elektromotors verwendet wird.

Daher liegt der Erfindung die Aufgabe zugrunde, eine Baumaschine, insbesondere einen Stra-ßenfertiger oder einen Beschicker, zu schaffen, bei der die Bereitstellung eines Kühlluftstroms optimal an die Betriebsbedingungen der Baumaschine angepasst ist, wobei dazu einfache, kostengünstige Mittel eingesetzt werden. Ebenfalls stellt sich die Aufgabe, ein Verfahren zu schaffen, mit welchem eine verbesserte Regelung und Steuerung eines Kühlsystems möglich ist.

Diese Aufgabe wird gelöst mit den technischen Mitteln des Anspruchs 1 beziehungsweise mit den technischen Mitteln des unabhängigen Anspruchs 13. Verbesserte Weiterbildungen der Erfindung sind durch die technischen Mittel der abhängigen Ansprüche gegeben.

Die Erfindung betrifft eine Baumaschine, insbesondere einen Straßenfertiger oder einen Beschicker, mit automatischer Lüfterdrehzahlregelung. Die Baumaschine umfasst dazu eine Antriebseinheit, eine Steuereinheit und eine Kühleinheit, die mindestens einen Lüfter umfasst. Der mindestens eine Lüfter ist dazu vorgesehen, einen Kühlluftstrom zu erzeugen. Der Kühlluftstrom dient beispielsweise dazu, Arbeitsmedien, vornehmlich Kühlwasser, Ladeluft und Hydrauliköl, auf eine für den Betrieb der Baumaschine benötigte Temperatur zu kühlen.

Insbesondere ist die Steuereinheit der Baumaschine dazu konfiguriert, betriebsspezifische Daten zu erfassen. Diese werden im Folgenden noch näher erklärt.

Erfindungsgemäß ist für die Baumaschine vorgesehen, dass die Kühleinheit mindestens einen regelbaren Elektromotor umfasst, der mit dem jeweiligen Lüfter funktionell verbunden ist. Der Elektromotor ist zum Antrieb des Lüfters vorgesehen, damit der Lüfter den benötigten Kühlluftstrom erzeugt, um für eine entsprechende Kühlung zu sorgen. Außerdem ist erfindungsgemäß die Steuereinheit dazu konfiguriert, in Abhängigkeit der betriebsspezifischen Daten eine elektrische Leistung des jeweiligen Elektromotors derart zu regeln, dass am Lüfter eine gewünschte Lüftersolldrehzahl einstellbar ist.

Dadurch bietet die Erfindung den technischen Vorteil, dass die Lüfterdrehzahlregelung der Baumaschine durch einen eigens dafür vorgesehenen Elektromotor beziehungsweise durch mehrere dafür vorgesehene Elektromotoren derart durchführbar ist, dass eine starre Kupplung mit der Antriebseinheit umgehbar ist. Ebenfalls bietet der Einsatz des Elektromotors eine kostengünstige Alternative zum Einsatz von hydraulischen Antrieben. Dabei lassen sich anhand des verwendeten Elektromotors insbesondere Wartungs- und Instandhaltungskosten reduzieren.

Die bedarfsgerechte Regelung und Steuerung des Elektromotors mittels der Steuereinheit in Abhängigkeit der betriebsspezifischen Daten ermöglicht es, dass sich die Lärmentwicklung während des Betriebs der Baumaschine reduzieren lässt. Dies liegt daran, dass der Lüfter nicht mehr wie bei herkömmlichen Baumaschinen starr mit dem Dieselmotor verbunden ist, sondern situationsbedingt in Abhängigkeit der betriebsspezifischen Daten durch die Steuereinheit regelbar ist. Dadurch lässt sich die gewünschte und benötigte Lüftersolldrehzahl optimal an den Betriebszustand der Baumaschine anpassen.
Zu rechnen ist auch damit, dass durch die betriebsbedingte Steuerung des Elektromotors beziehungsweise des daran gekoppelten Lüfters für dieselben eine verbesserte Lebenserwartung entsteht, wodurch Betriebskosten reduziert werden können.

Erfindungsgemäß sind als betriebsspezifische Daten zumindest eine Drehzahl der Antriebseinheit durch die Steuereinheit erfassbar. Der Lastfaktor kann beispielsweise dazu vorgesehen sein, einen Betriebszustand der Bausmaschine wiederzugeben, wie etwa eine Einbaufahrt, eine Transportfahrt oder eine Fahrt während des Umsetzens der Baumaschine auf dem Einbaufeld. Dagegen gibt die Drehzahl der Antriebseinheit die momentane Dieselmotordrehzahl der Antriebseinheit wieder, die je nach Einsatz der Baumaschine ansteigen oder fallen kann. Das Erfassen des Lastfaktors beziehungsweise der Drehzahl der Antriebseinheit durch die Steuereinheit wird durch eine funktionelle Verbindung dieser mit der Antriebseinheit ermöglicht. Dies bietet vor allem den technischen Vorteil, dass zu jeder Zeit während des Betriebs der Baumaschine betriebsspezifische Daten der Antriebseinheit, nämlich der Lastfaktor und/oder die Dieselmotordrehzahl erfassbar sind, um darauf basierend die gewünschte Lüftersolldrehzahl einzustellen.
In einer weiteren Ausführungsform der Erfindung ist vorgesehen, dass die Steuereinheit dazu konfiguriert ist, als betriebsspezifische Daten eine Ansaugtemperatur und/oder eine Umgebungstemperatur der Baumaschine zu erfassen. Zum Erfassen der Ansaugtemperatur und/oder der Umgebungstemperatur können Mittel vorgesehen sein, die derart mit der Steuerung funktionell verbunden sind, dass die durch die Steuerung erfassten Temperaturen in der Berechnung der gewünschten Lüftersolldrehzahl berücksichtigt werden. Durch das Erfassen der Ansaug- beziehungsweise der Umgebungstemperatur ist es möglich je nach Wetterlage den Lüfterbetrieb zu optimieren.

Vorteilhaft ist auch, wenn die Steuereinheit dazu konfiguriert ist, als betriebsspezifische Daten die Temperaturen der Ladeluft, der Kühlluft und/oder des Hydrauliköls zu erfassen. Beim Betrieb der Baumaschine ist es insbesondere wichtig, diese Betriebsmedien, nämlich die Ladeluft, die Kühlluft sowie das Hydrauliköl, auf einer bestimmten Temperatur zu halten, damit die damit versorgten Aggregate problemlos funktionieren. Je nach Temperaturvorgabe der Betriebsmedien lässt sich der Lüfter durch die Steuerung derart regeln, dass die Betriebsmedien, nämlich die Ladeluft, die Kühlluft und/oder das Hydrauliköl, die vorgegebene Temperatur halten. Dadurch kann der Betrieb der Baumaschine verbessert werden.

Um die gewünschte Lüftersolldrehzahl zu ermitteln, sind erfindungsgemäß für die Steuereinheit mehrere Kennfelder vorgesehen. Die Kennfelder sind dazu ausgebildet, anhand der betriebsspezifischen Daten die gewünschte Lüftersolldrehzahl zu ermitteln, um darauf basierend mittels der Steuereinheit eine Ansteuerung des Elektromotors vorzunehmen. Die Kennfelder bieten eine einfache Lösung für die Steuereinheit, die gewünschte Lüftersolldrehzahl zu ermitteln. Durch den Einsatz mehrerer Kennfelder lassen sich unterschiedliche Betriebszustände der Baumaschine in eine spezifische, daran angepasste Belüftung regeln.

Erfindungsgemäß ist die Steuereinheit dazu konfiguriert, angesichts der Drehzahl der Antriebseinheit ein vorbestimmtes Kennfeld zu aktivieren, um damit die Lüftersolldrehzahl zu bestimmen. Dadurch kann vorab eine Vorauswahl des am besten für die Berechnung der Lüftersolldrehzahl geeigneten Kennfelds getroffen werden, um die Lüfterdrehzahl speziell an den aktuellen Betriebszustand der Baumaschine anzupassen.
In einer Ausführungsform der Erfindung ist die Steuereinheit dazu konfiguriert, dass die Lüftersolldrehzahl anhand des aktivierten Kennfelds bestimmbar ist, indem das Kennfeld angesichts des Lastfaktors der Antriebseinheit sowie der Umgebungstemperatur die Lüftersolldrehzahl bestimmt. Dies bietet den technischen Vorteil, dass sowohl spezifische Daten des Umfelds der Baumaschine, als auch spezifische Daten des eigentlichen Betriebs der Antriebseinheit zur Berechnung der Lüftersolldrehzahl berücksichtigt werden. Alternativ dazu ist in einer weiteren Ausführungsform der Erfindung vorgesehen, dass die Steuereinheit dazu konfiguriert ist, die Lüftersolldrehzahl durch das vorbestimmte Kennfeld angesichts der Ladeluft, der Kühlluft und/oder der Hydrauliköltemperatur zu bestimmen. Dabei kann das Bestimmen der Lüftersolldrehzahl durch eine beliebige Kombination der Betriebstemperaturen, nämlich der Ladeluft, der Kühlluft und/oder der Hydrauliköltemperatur, erfolgen. Somit lassen die Betriebsmedien anhand der diesbezüglichen Kennfeldberechnung der Lüftersolldrehzahl auf der benötigten Betriebstemperatur halten, weil sie durch den Lüfter entsprechend mit einem Kühlluftstrom versorgt werden.

Um den Lüfter auf die gewünschte Lüftersolldrehzahl zu bringen, muss am Elektromotor eine entsprechende Versorgungsspannung anliegen. Deshalb ist vorzugsweise vorgesehen, dass die Steuereinheit eine Leistungselektronik umfasst, die den Elektromotor angesichts der ermittelten Lüftersolldrehzahl mit einer bestimmten, änderbaren Spannung versorgt. Die Leistungselektronik stellt also sicher, dass eine ausreichende Stromversorgung des Elektromotors zustande kommt, um den Lüfter auf die z.B. mittels der zuvor erwähnten Kennfeldberechnung erhaltenen Lüftersolldrehzahl zu bringen.

In einer weiteren Ausführungsform der Erfindung ist vorgesehen, dass die Steuereinheit Mittel umfasst, die dazu ausgebildet sind, die mittels der Steuereinheit erfassten betriebsspezifischen Daten jeweils einer Mittelwertbildung zu unterziehen. Dies ist dann von Vorteil, wenn verhindert werden soll, dass der Elektromotor einer zu häufigen Ansteuerung durch die Steuereinheit ausgesetzt ist, wodurch das Reaktionsverhalten des Lüfters hektisch werden könnte. Durch diese zur Mittelwertbildung vorgesehenen Mittel der Steuereinheit ist es möglich, betriebsspezifische Daten über einen vorbestimmten Zeitraum während der Einbaufahrt zu erfassen, um daraus eine gemittelte Erfassungsgröße zu berechnen, die zur Lüfterregelung hernehmbar ist. Anhand der Mittelwertbildung durch die Steuereinheit lässt sich ebenfalls der Rechenaufwand so reduzieren, dass die Steuereinheit nicht Gefahr läuft, warm zu laufen.

Vorteilhaft wäre es, wenn die Steuereinheit dazu ausgebildet ist, jeweils betriebsspezifische Daten mit einer Abtastrate von mindestens 2, vorzugsweise mind. 20 Werten innerhalb mindestens einer Sekunde zu erfassen, um daraus einen Mittelwert zu bilden. Dabei ist gemeint, dass mindestens jeweils 20 betriebsspezifische Daten gleicher Gattung innerhalb eines vorbestimmten Zeitintervalls zur Mittelwertbildung herangezogen werden. Besonders vorteilhaft wäre es, wenn die Steuereinheit dazu ausgebildet ist, im Sekundentakt die jeweiligen betriebsspezifischen Daten zu erfassen, wobei zur Mittelwertbildung insgesamt mindestens zwanzig der jeweils erfassten Daten herangezogen werden. Dadurch ist es möglich, den Lüfter so zu regeln, dass es zu keiner hektischen Regelung kommt, wobei ebenso die Geräuschentwicklung während des Betriebs reduziert werden kann.

Damit es nicht vorkommt, dass von einer Lüftersolldrehzahl abrupt auf eine neu berechnete Lüftersolldrehzahl gewechselt wird, ist vorzugsweise vorgesehen, dass die Steuereinheit Mittel zum Dämpfen umfasst, die dazu ausgebildet sind, die Lüftersolldrehzahl langsam einzustellen. Die Mittel zum Dämpfen könne beispielsweise eine Rampenfunktion umfassen, mittels derer ein langsamer Anstieg der Lüftersolldrehzahl erreichbar ist. Die Mittel zum Dämpfen beziehungsweise die Rampenfunktion gibt eine Steigung vor, mittels derer gezielt und schrittweise eine Verstellung der Solldrehzahl möglich ist. Dabei ist die Steigung der Rampenfunktion derart flach, dass der Bediener des Fertigers nicht den Eindruck eines Drehzahlsprungs empfindet. Andererseits ist die Steigung der Rampenfunktion derart steil, dass es zu einer raschen Lüfterdrehzahlanpassung kommt, um einer Überhitzung des Kühlsystems entgegenzuwirken. In einer besonders vorteilhaften Ausführungsform der Erfindung ist vorgesehen, dass die Steigung der Rampenfunktion in einem Bereich von 0,1 Umdrehungen pro Sekunde bis 200 Umdrehungen pro Sekunde liegt, wobei vorzugsweise die Steigung etwa 12 Umdrehungen pro Sekunde ist. Dadurch kann die Lüfterfunktion optimiert werden.

In einer weiteren Ausführungsform der Erfindung ist vorgesehen, dass die Steuereinheit einen Speicher umfasst, der dazu ausgebildet, bestimmte betriebsspezifische Daten während Betriebs der Baumaschine zu speichern. Außerdem kann vorgesehen sein, dass der Speicher wahlweise Zwischenergebnisse von Berechnungsvorgängen innerhalb der Steuerung speichert. Die gespeicherten Werte durch den Speicher können beispielsweise bei bestimmten Betriebszuständen der Baumaschine abgerufen werden, wodurch eine zügige Berechnung der Lüftersolldrehzahl möglich ist.

Vorzugsweise umfasst die Kühleinheit einen Sensor, der dazu ausgebildet ist, die Lüfteristdrehzahl zu erfassen und diese an die Steuereinheit weiterzuleiten. Damit ist es möglich, den Betrieb des Lüfters zu überwachen.

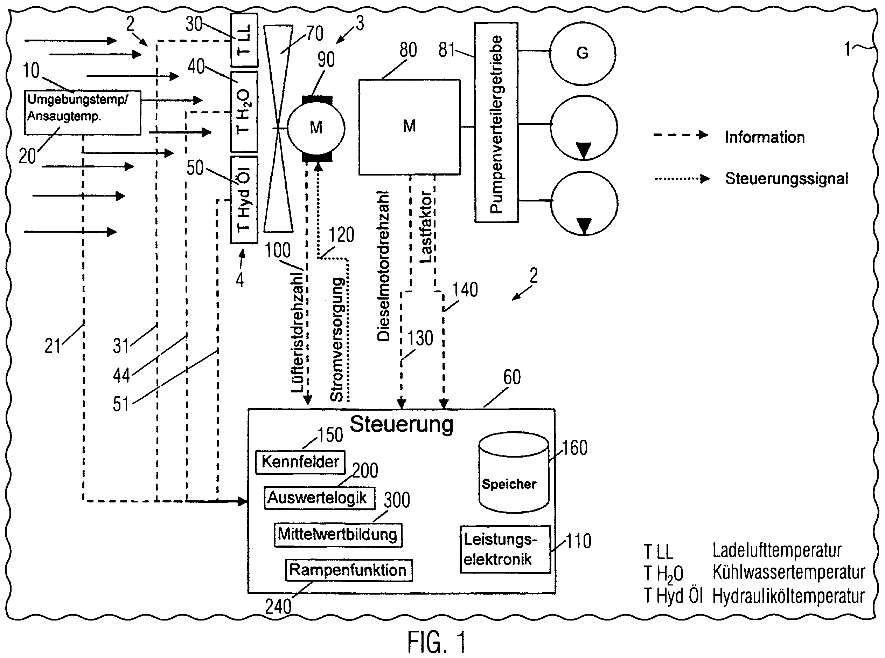

Die Erfindung betrifft auch ein Verfahren zum automatischen Regeln und Steuern eines Kühlsystems einer Baumaschine. Dafür ist eine Steuereinheit vorgesehen, die betriebsspezifische Daten der Baumaschine erfasst und anhand dieser Daten eine gewünschte Lüftersolldrehzahl bestimmt. In Reaktion darauf versorgt die Steuereinheit einen für das Kühlsystem vorgesehenen Elektromotor mit einer Spannung, die derart vorgesehen ist, dass ein mit dem Elektromotor verbundener Lüfter die gewünschte Lüftersolldrehzahl erreicht.
Eine Ausführungsform der Erfindung wird durch die Figur 1 verdeutlicht. Die Figur 1 zeigt einen schematischen Aufbau der Baumaschine 1, wie sie laut Erfindung vorgesehen ist.

Die Baumaschine 1 ist ein Straßenfertiger oder ein Beschicker. Die Baumaschine 1 umfasst eine Antriebseinheit 80, die mit einem Pumpenverteilergetriebe 81 verbunden ist. Die Antriebseinheit ist außerdem funktionell mit einer Steuereinheit 60 verbunden. Dabei wird durch die gestrichelten Pfeile 130, 140 dargestellt, dass die Steuereinheit 60 einen Lastfaktor sowie die Drehzahl der Antriebseinheit erfassen kann.
Des Weiteren ist die Steuereinheit mit einer Kühleinheit 3 funktionell verbunden. Die Kühleinheit 3 umfasst einen Elektromotor 90 sowie einen mit dem Elektromotor 90 gekoppelten Lüfter 70.
Mittels einer Punktlinie 120 wird gezeigt, dass eine Stromversorgung von der Steuereinheit 60 zum Elektromotor 90 ausgeht. Durch einen gestrichelten Pfeil 100, der vom Elektromotor 90 zur Steuereinheit 60 verläuft, wird klargestellt, dass eine Lüfteristdrehzahl durch die Steuereinheit 60 erfassbar ist.
Die Steuereinheit 60 ist ebenfalls dazu ausgebildet, Temperaturen einer Ladeluft 30, einer Kühlluft 40 sowie die Temperatur des Hydrauliköls 50 zu erfassen. Die Temperaturerfassung der Ladeluft 30, der Kühlluft 40 sowie des Hydrauliköls 50 ist durch gestrichelte Linien 31, 41, 51 dargestellt, die in Richtung zur Steuereinheit 60 verlaufen. Durch eine Strichpfeillinie 21 ist dargestellt, dass die Steuereinheit 60 eine Umgebungstemperatur 10 sowie eine Ansaugtemperatur 20 erfassen kann.

Die Steuereinheit 60 umfasst mehrere Kennfelder 150, welche dazu ausgebildet sind, anhand der Drehzahl der Antriebseinheit,

Die Steuereinheit 60 umfasst außerdem Mittel 300, die wahlweise für eine Mittelwertbildung der erfassten spezifischen Daten 2 vorgesehen sind. Die erfassten spezifischen Daten 2 können den Lastfaktor, die Dieselmotordrehzahl, die Ladelufttemperatur, die Kühllufttemperatur, die Hydrauliköltemperatur, die Umgebungstemperatur und/oder die Ansaugtemperatur umfassen.

Durch die Mittel 300 zur Mittelwertbildung erfasst die Steuereinheit 60 mehrere Werte jeder Messgröße mit einer Abtastrate von 2 bis 1000 Werten innerhalb von zehn Millisekunden bis 360 Sekunden. Aus den erfassten Werten wird ein Mittelwert gebildet. Vorzugsweise erfolgt die Erfassung mit einer Abtastrate von mindestens 20 Werten innerhalb von mindestens einer Sekunde. Hierdurch wird verhindert, dass sich schnelle kurze und große Lastsprünge in der Lüfterdrehzahl abbilden und es damit während des Betriebs es zu unangenehmen Geräuschschwankungen kommt. Vorgesehen ist auch, dass die Mittel 300 dazu ausgebildet sind, eine alternative Mittelung mittels gleitendem Mittelwert, geometrischem Mittel, harmonischem Mittel, quadratischem Mittel oder kubischem Mittel durchzuführen.

Außerdem umfasst die Steuereinheit Mittel zum Dämpfen 240. Dadurch können mögliche Drehzahlsprünge am Lüfter 70 mittels einer für die Mittel 240 vorgesehenen Rampenfunktion gedämpft werden. Die Mittel zum Dämpfen 240 sind dazu konfiguriert, eine schrittweise Verstellung der Lüfteristdrehzahl durchzuführen, bis die Lüftersolldrehzahl erreicht ist. Das schrittweise Anfahren der Lüftersolldrehzahl geschieht mittels einer definierten Steigung, die für die Mittel zum Dämpfen 240 vorgegeben ist. Die Steigung der Mittel 240, also der Rampenfunktion sollte, so flach sein, dass der Bediener der Baumaschine nicht den Eindruck eines Drehzahlsprungs hat. Andererseits liegt die Steigung in einem solchen Maße vor, dass die Lüftersolldrehzahl schnell genug ansteigt, um eine Überhitzung des Kühlsystems 3 zu verhindern. Vorstellbar ist eine Rampensteigung zwischen 0,1 und 200 Umdrehungen pro Sekunde, wobei vorzugsweise eine Steigung von etwa 12 Umdrehungen pro Sekunde vorgegeben ist.

Außerdem ist für die Steuereinheit 60 ein Speicher 160 vorgesehen. Im Speicher 160 können die betriebsspezifischen Daten hinterlegt werden, wobei im Speicher 160 auch wahlweise das Abspeichern von Zwischenergebnissen von Berechnungsvorgängen innerhalb der Steuerung 60 möglich ist.

Schließlich umfasst die Steuereinheit 60 eine Leistungselektronik 110. Die Leistungselektronik 110 ist dazu konfiguriert, eine Versorgungsspannung, also eine Stromversorgung für den Elektromotor 90 sicherzustellen. Die Größe der Versorgungsspannung, die dem Elektromotor durch die Leistungselektronik 110 zur Verfügung gestellt wird, hängt von der ermittelten Lüftersolldrehzahl ab.

Straßenfertiger benötigen den maximalen Kühlluftvolumenstrom nur bei extremen Arbeitsbedingungen mit sehr hohen Umgebungstemperaturen bei sehr hohen Motorauslastungen. Dieser Betriebszustand tritt allerdings selten auf, so dass die Lüftersolldrehzahl bei einer Vielzahl von Anwendungsfällen reduziert werden kann und somit zu einem geringeren Geräusch am Straßenfertiger führt. Wird der Lüfter 70 nicht am maximalen Auslegungspunkt des Fertigers 1 betrieben, lässt sich durch die reduzierte Lüftersolldrehzahl Kraftstoff einsparen. Verglichen mit einem hydraulisch angetriebenen Lüfter hat der Lüfterantrieb gemäß der Erfindung mit dem Elektromotor 90 einen besseren Gesamtwirkungsgrad.

Ebenfalls bietet die Erfindung den technischen Vorteil, dass die Lüftersolldrehzahl in Abhängigkeit vom Lastfaktor und der Umgebungstemperatur 10 bestimmbar ist, wodurch eine schnelle Reaktionszeit des Lüfters 70 möglich ist, um eine Überhitzung der Maschine zu verhindern. Da der Lastfaktor und die Umgebungstemperatur 10 zu einem Zeitpunkt des Aufheizvorganges der Kühlmedien 30, 40, 50 bereits vorliegen, lässt sich die Lüftersolldrehzahl vor einem Temperaturanstieg in der Kühleinheit 3 einregeln. Somit werden Totzeiten umgangen, da bereits vor einer möglichen Überhitzung der richtige Kühlluftstrom durch den Kühler 70 einstellbar ist. Mit dem eigens für die Kühleinheit vorgesehenen Elektromotor 90 ist dies unabhängig von der aktuellen Dieselmotordrehzahl der Antriebseinheit 80 möglich.

Dadurch, dass der Lüfter 70 nicht wie bei direkt angetriebenen Lüftern in der Nähe von Antriebswellen der Antriebseinheit 80 positioniert werden muss, kann die Position der Kühleinheit 3, insbesondere des Lüfters 70 innerhalb der Baumaschine 1 frei gewählt werden.

Gerade im Hinblick auf die zunehmend verschärfte Bauraumthematik, verursacht durch aufwändige Abgasnachbehandlungssysteme, ist es vorteilhaft, bei der Anordnung der Kühleinheit 3 nicht an feste Positionen innerhalb der Baumaschine 1 gebunden zu sein.

Wie bereits beschrieben wurde, können für die Kühleinheit 3 mehrere Lüfter 70 vorgesehen sein, die jeweils durch mehrere Elektromotoren 90 antreibbar sind. Mit mehreren elektrisch angetriebenen Lüftern 70 ist es somit möglich, die zu kühlenden Medien, beispielsweise die Ladeluft, die Kühlluft, und/oder das Hydrauliköl separat entsprechend dem individuellen Kühlluftbedarf zu temperieren.

Weiter wäre es denkbar, Diagnosefunktionen in die Steuereinheit zu implementieren. Sollten die Temperaturen nicht korrekt erfasst werden können, könnte damit eine Überhitzung der Baumaschine 1 vermieden werden. Beispielsweise könnte die Funktion der Temperatursensoren diagnostiziert werden.

Die Erfindung betrifft eine Baumaschine mit einer verbesserten Kühlluftversorgung, so dass es zu keiner Überhitzung der Baumaschine kommt. Dabei kann die Kühleinheit 3 bedingt durch betriebsspezifische Daten 2 der Situation entsprechend angesteuert werden. Für die Kühleinheit 3 ist eigens mindestens ein Elektromotor vorgesehen, der für eine effiziente und kostengünstige Lösung sorgt, um den benötigten Kühlluftstrom mittels gekoppeltem Lüfter 70 zur Verfügung zu stellen.

## Patentansprüche

1. Baumaschine (1) mit automatischer Lüfterdrehzahlregelung mit einer Antriebseinheit (80) für die Baumaschine, einer Steuereinheit (60) und einer Kühleinheit (3), die mindestens einen Lüfter (70) umfasst, um einen Kühlluftstrom zu erzeugen, wobei die Steuereinheit (60) dazu konfiguriert ist, betriebsspezifische Daten (2) zu erfassen, darunter eine Drehzahl (130) der Antriebseinheit (80), und wobei die Kühleinheit (3) mindestens einen regelbaren Elektromotor (90) umfasst, der mit dem jeweiligen Lüfter (70) funktionell verbunden ist, **dadurch gekennzeichnet,**
**dass** die Baumaschine ein Straßenfertiger oder Beschicker ist,
**dass** die Steuereinheit (60) dazu konfiguriert ist, in Abhängigkeit der betriebsspezifischen Daten (2) eine elektrische Leistung des jeweiligen Elektromotors (90) zu regeln, um am Lüfter (70) eine gewünschte Lüftersolldrehzahl einzustellen,
**dass** die Steuereinheit (60) mehrere Kennfelder (150) umfasst, welche zur Bestimmung der Lüftersolldrehzahl vorgesehen sind, und
**dass** die Steuereinheit (60) dazu konfiguriert ist, angesichts der Drehzahl (130) der Antriebseinheit (80) ein vorbestimmtes Kennfeld (150) zu aktivieren, um damit die Lüftersolldrehzahl zu bestimmen.

2. Baumaschine nach Anspruch 1, **dadurch gekennzeichnet, dass** die Steuereinheit (60) dazu konfiguriert ist, durch die betriebsspezifischen Daten (2) einen Lastfaktor (14) zu erfassen.

3. Baumaschine nach Anspruch 1 oder 2, **dadurch gekennzeichnet, dass** die Steuereinheit (60) dazu konfiguriert ist, durch die betriebsspezifischen Daten (2) eine Ansaugtemperatur (20) und/oder eine Umgebungstemperatur (10) der Baumaschine (1) zu erfassen.

4. Baumaschine nach einem der vorigen Ansprüche, **dadurch gekennzeichnet, dass** die Steuereinheit (60) dazu konfiguriert ist, durch die betriebsspezifischen Daten (2) eine Ladeluft-, Kühlluft- und/oder Hydrauliköltemperatur (30, 40, 50) zu erfassen.

5. Baumaschine nach einer der vorigen Ansprüche, **dadurch gekennzeichnet, dass** die Steuereinheit (60) dazu konfiguriert ist, durch das vorbestimmte Kennfeld (150) die Lüftersolldrehzahl angesichts bestimmter betriebsspezifischer Daten (2), insbesondere angesichts des Lastfaktors (140) der Antriebseinheit (80) und der Umgebungstemperatur (150), zu bestimmen.

6. Baumaschine nach einer der Ansprüche 1 bis 4, **dadurch gekennzeichnet, dass** die Steuereinheit (60) dazu konfiguriert ist, durch das vorbestimmte Kennfeld (150) die Lüftersolldrehzahl angesichts der Ladeluft-, Kühlluft- und/oder Hydrauliköltemperatur (30, 40, 50) zu bestimmen.

7. Baumaschine nach einem der vorigen Ansprüche, **dadurch gekennzeichnet, dass** die Steuereinheit (60) eine Leistungselektronik (110) umfasst, die den Elektromotor (90) angesichts der ermittelten Lüftersolldrehzahl mit einer vorgesehenen Spannung versorgt.

8. Baumaschine nach einem der vorigen Ansprüche, **dadurch gekennzeichnet, dass** die Steuereinheit (60) Mittel (300) umfasst, die dazu ausgebildet sind, die mittels der Steuereinheit (60) erfassten betriebsspezifischen Daten (2) jeweils einer Mittelwertbildung zu unterziehen.

9. Baumaschine nach Anspruch 8, **dadurch gekennzeichnet, dass** die Mittel (300) dazu ausgebildet sind, jeweils mindestens zehn, vorzugsweise mindestens zwanzig betriebsspezifische Daten (2) zu erfassen, um daraus einen Mittelwert zu bilden.

10. Baumaschine nach einem der vorigen Ansprüche, **dadurch gekennzeichnet, dass** die Steuereinheit (60) Mittel (240) zum Dämpfen umfasst, die dazu ausgebildet sind, die Lüftersolldrehzahl stufenlos einzustellen.

11. Baumaschine nach einem der vorigen Ansprüche, **dadurch gekennzeichnet, dass** die Steuereinheit (60) einen Speicher (160) umfasst, der dazu ausgebildet ist, bestimmte betriebsspezifische Daten (2) während des Betriebs der Baumaschine (1) zu speichern.

12. Baumaschine nach einem der vorigen Ansprüche, **dadurch gekennzeichnet, dass** die Kühleinheit (3) einen Sensor (4) umfasst, der dazu ausgebildet ist, die Lüfteristdrehzahl zu erfassen und diese an die Steuereinheit (60) weiterzuleiten.

13. Verfahren zum automatischen Regeln und Steuern eines Kühlsystems (3) einer Baumaschine (1) mit einer Antriebseinheit (80), wobei eine vorgesehene Steuereinheit (60) betriebsspezifische Daten (2) der Baumaschine erfasst und anhand dieser eine gewünschte Lüftersolldrehzahl bestimmt, wobei die Steuereinheit (60) einen für das Kühlsystem (3) vorgesehenen Elektromotor (90) mit einer regelbaren Spannung versorgt, um die gewünschte Lüftersolldrehzahl an einem mit dem Elektromotor (90) verbundenen Lüfter (70) zu erreichen, und wobei die Steuereinheit (60) ein vorbestimmtes Kennfeld (150) angesichts einer Drehzahl (130) der Antriebseinheit (80) aktiviert, um damit die Lüftersolldrehzahl zu bestimmen.

## Claims

1. Construction machine (1) with automatic fan rotational speed regulation with a drive unit (80) for the construction machine, a control unit (60) and a cooling unit (3) that comprises at least one fan (70) in order to produce a cooling airflow, wherein the control unit (60) is configured for registering operation-specific data (2), wherein the control unit (60) is configured for registering a rotational speed (130) of the drive unit (80), and wherein the cooling unit (3) comprises at least one regulatable electric motor (90) that is connected functionally to the respective fan (70)
**characterised in that**
the construction machine (1) is a road paver or a feeder,
the control unit (60) is configured for regulating, depending on the operation-specific data (2), an electric output of the respective electric motor (90) in order to adjust a desired target fan rotational speed on the fan (70),
the control unit (60) comprises several mappings (150) which are provided for determining the target fan rotational speed, and
the control unit (60) is configured for activating, in light of the rotational speed (130) of the drive unit (80), a predetermined mapping (150) in order to determine with it the target fan rotational speed.

2. Construction machine according to Claim 1 **characterised in that** the control unit (60) is configured for registering a load factor (14) by means of the operation-specific data (2).

3. Construction machine according to Claim 1 or 2 **characterised in that** the control unit (60) is configured for the purpose of registering an intake temperature (20) and / or an ambient temperature (10) of the construction machine (1) by means of the operation-specific data (2).

4. Construction machine according to one of the preceding claims **characterised in that** the control unit (60) is configured for registering a charge air temperature, cooling air temperature and / or hydraulic oil temperature (30, 40, 50) by means of the operation-specific data (2).

5. Construction machine according to one of the previous Claims **characterised in that** the control unit (60) is configured for determining the target fan rotational speed by means of the predetermined mapping (150) in light of particular operation-specific data (2), particularly in light of the load factor (140) of the drive unit (80) and in light of the ambient temperature (10).

6. Construction machine according to one of the previous Claims 1 to 4 **characterised in that** the control unit (60) is configured for determining the target fan rotational speed by means of the predetermined mapping (150) in light of the charge air temperature, cooling air temperature and / or hydraulic oil temperature (30, 40, 50).

7. Construction machine according to one of the previous claims **characterised in that** the control unit (60) comprises power electronics (110) that supply the electric motor (90) with a predetermined voltage in light of the determined target fan rotational speed.

8. Construction machine according to one of the previous claims **characterised in that** the control unit (60) comprises an instrument (300) that is formed for the purpose of subjecting the operation-specific data registered by means of the control unit (60) to averaging.

9. Construction machine according to Claim 8 **characterised in that** the instrument (300) is formed for the purpose of registering at least ten, preferably at least twenty, operation-specific data (2) in order from them to form an average value.

10. Construction machine according to one of the previous claims **characterised in that** the control unit (60) comprises an instrument (240) for attenuation that is formed for adjusting the target fan rotational speed smoothly, without steps.

11. Construction machine according to one of the previous claims **characterised in that** the control unit (60) comprises a memory (160) that is formed for storing particular operation-specific data (2) during the operation of the construction machine (1).

12. Construction machine according to one of the previous claims **characterised in that** the cooling unit (3) comprises a sensor (4) that is formed for registering the actual fan rotational speed and forwarding this to the control unit (60).

13. Method for the automatic regulation and control of a cooling system (3) of a construction machine (1) with a drive unit (80), wherein a provided control unit (60) registers operation-specific data (2) of the construction machine and, on the basis of these data, determines a desired target fan rotational speed, and wherein the control unit (60) supplies an electric motor (90) that is provided for the cooling system (3) with a regulatable voltage in order to achieve the desired target fan rotational speed on a fan (70) connected to the electric motor (90), and wherein the control unit (60) activates a predetermined mapping (150) in light of the rotational speed (130) of the driver unit (80), in order to determine with it the target fan rotational speed.

## Revendications

1. Engin de travaux publics (1) à régulation automatique de vitesse de rotation de ventilateur, comprenant une unité d'entraînement (80) pour l'engin de travaux publics, une unité de commande (60) et une unité de refroidissement (3) comportant au moins un ventilateur (70) pour produire un flux d'air de refroidissement, engin de travaux publics
dans lequel l'unité de commande (60) est configurée pour relever des données (2) spécifiques au fonctionnement, parmi lesquelles une vitesse de rotation (130) de l'unité d'entraînement (80), et
dans lequel l'unité de refroidissement (3) comprend au moins un moteur électrique (90) pouvant être régulé, qui est relié de manière fonctionnelle au ventilateur (70) respectivement correspondant,
**caractérisé**
**en ce que** l'engin de travaux publics est un finisseur de route ou un alimentateur,
**en ce que** l'unité de commande (60) est configurée pour réguler une puissance électrique du moteur électrique (90) considéré, en fonction des données (2) spécifiques au fonctionnement, en vue de régler une vitesse de rotation de consigne souhaitée au niveau du ventilateur (70),
**en ce que** l'unité de commande (60) comprend plusieurs diagrammes caractéristiques (150), qui sont prévus pour la détermination de la vitesse de rotation de consigne du ventilateur, et
**en ce que** l'unité de commande (60) est configurée pour activer, au regard de la vitesse de rotation (130) de l'unité d'entraînement (80), un diagramme caractéristique (150) prédéterminé, en vue d'en déterminer la vitesse de rotation de consigne du ventilateur.

2. Engin de travaux publics selon la revendication 1, **caractérisé en ce que** l'unité de commande (60) est configurée pour relever un facteur de charge (14) au regard des données (2) spécifiques au fonctionnement.

3. Engin de travaux publics selon la revendication 1 ou la revendication 2, **caractérisé en ce que** l'unité de commande (60) est configurée pour relever, au regard des données (2) spécifiques au fonctionnement, une température d'aspiration (20) et/ou une température environnante (10) de l'engin de travaux publics (1).

4. Engin de travaux publics selon l'une des revendications précédentes, **caractérisé en ce que** l'unité de commande (60) est configurée pour relever, au regard des données (2) spécifiques au fonctionnement, une température d'air de charge, d'air de refroidissement et/ou d'huile hydraulique (30, 40, 50).

5. Engin de travaux publics selon l'une des revendications précédentes, **caractérisé en ce que** l'unité de commande (60) est configurée pour déterminer, par le diagramme caractéristique prédéterminé (150), la vitesse de rotation de consigne du ventilateur, au regard de données (2) spécifiques au fonctionnement, notamment au regard du facteur de charge (140) de l'unité d'entraînement (80) et de la température environnante (10) .

6. Engin de travaux publics selon l'une des revendications 1 à 4, **caractérisé en ce que** l'unité de commande (60) est configurée pour déterminer, par le diagramme caractéristique prédéterminé (150), la vitesse de rotation de consigne du ventilateur, au regard de la température d'air de charge, d'air de refroidissement et/ou d'huile hydraulique (30, 40, 50).

7. Engin de travaux publics selon l'une des revendications précédentes, **caractérisé en ce que** l'unité de commande (60) comprend une électronique de puissance (110), qui alimente le moteur électrique (90), au regard de la vitesse de rotation de consigne du ventilateur déterminée, avec une tension prévue à cet effet.

8. Engin de travaux publics selon l'une des revendications précédentes, **caractérisé en ce que** l'unité de commande (60) comprend des moyens (300), qui sont conçus pour soumettre les données (2) spécifiques au fonctionnement relevées au moyen de l'unité de commande (60), respectivement à la formation d'une moyenne.

9. Engin de travaux publics selon la revendication 8, **caractérisé en ce que** les moyens (300) sont conçus pour relever, respectivement au moins dix, de préférence au moins vingt données (2) spécifiques au fonctionnement, pour en former une valeur moyenne.

10. Engin de travaux publics selon l'une des revendications précédentes, **caractérisé en ce que** l'unité de commande (60) comprend des moyens (240) d'atténuation, qui sont conçus pour régler de manière continue la vitesse de rotation de consigne du ventilateur.

11. Engin de travaux publics selon l'une des revendications précédentes, **caractérisé en ce que** l'unité de commande (60) comprend une mémoire (160), qui est conçue pour mémoriser, pendant le fonctionnement de l'engin de travaux publics (1), des données (2) spécifiques au fonctionnement, déterminées.

12. Engin de travaux publics selon l'une des revendications précédentes, **caractérisé en ce que** l'unité de refroidissement (3) comprend un capteur (4), qui est conçu pour relever la valeur réelle de vitesse de rotation du ventilateur et la transmettre à l'unité de commande (60) .

13. Procédé pour réguler et commander de manière automatique un système de refroidissement (3) d'un engin de travaux publics (1) avec une unité d'entraînement (60), d'après lequel une unité de commande (60) prévue à cet effet relève des données (2) spécifiques au fonctionnement de l'engin de travaux publics, et détermine au regard de celles-ci, une vitesse de rotation de consigne de ventilateur, souhaitée, d'après lequel l'unité de commande (60) alimente un moteur électrique (90) prévu pour le système de refroidissement (3), avec une tension pouvant être régulée, en vue d'atteindre la vitesse de rotation de consigne du ventilateur souhaitée au niveau d'un ventilateur (70) relié au moteur électrique (90), et d'après lequel l'unité de commande (60) active un diagramme caractéristique (150) prédéterminé, au regard d'une vitesse de rotation (130) de l'unité d'entraînement (80), pour en déterminer la vitesse de rotation de consigne du ventilateur.
